**Europäisches Patentamt**

**European Patent Office**

**Office européen des brevets**

(19)

(11) Veröffentlichungsnummer: **0 124 757**
**B1**

(12) # EUROPÄISCHE PATENTSCHRIFT

(45) Veröffentlichungstag der Patentschrift:
**16.09.87**

(51) Int. Cl.⁴: **B 05 D 5/08,** F 16 N 15/00,
H 01 H 1/60, H 01 H 3/62

(21) Anmeldenummer: **84103587.6**

(22) Anmeldetag: **31.03.84**

(54) **Verfahren zum Schmieren mechanisch beanspruchter Teile.**

(30) Priorität: **09.04.83 DE 3312798**

(43) Veröffentlichungstag der Anmeldung:
**14.11.84 Patentblatt 84/46**

(45) Bekanntmachung des Hinweises auf die Patenterteilung:
**16.09.87 Patentblatt 87/38**

(84) Benannte Vertragsstaaten:
**AT BE CH FR GB IT LI**

(56) Entgegenhaltungen:
**DE - A - 2 757 984**
**DE - B - 2 415 255**
**DE - B - 2 729 613**

(73) Patentinhaber: **Licentia Patent-Verwaltungs-GmbH,
Theodor-Stern-Kai 1, D-6000 Frankfurt/Main 70 (DE)**

(72) Erfinder: **Delliehausen, Claus, Dr., Hangstrasse 2,
D-3250 Hameln 7 (DE)**
Erfinder: **Kräkel, Gerhard, Ing. (grad.), Drosselweg 16,
D-3250 Hameln 1 (DE)**

(74) Vertreter: **Langer, Karl-Heinz, Dipl.-Ing. et al, Licentia
Patent-Verwaltungs-GmbH Theodor-Stern-Kai 1,
D-6000 Frankfurt/Main 70 (DE)**

## Beschreibung

Die Erfindung betrifft ein Verfahren zum Schmieren mechanisch beanspruchter Teile, insbesondere von gegenseitig im Eingriff befindlichen, aufeinander gleitenden Stahlteilen, unter Verwendung von Trockenschmiermitteln, bei dem in einem ersten Schritt $MoS_2$ (Molybdändisulfid)-Pulver auf die Teile aufgebracht wird.

Ein solches Verfahren ist aus der DE-B 24 15 255 bekannt. Es wird hierbei nach dem Aufbringen einer Trockenschmierschicht auf $MoS_2$ oder $WS_2$ ein Kunststoff, vorzugsweise Polytetrafluoräthylen mechanisch polierend aufgetragen. Das Auftragen des $MoS_2$-Filmes erfordert einen Poliervorgang. Auch ist ein mehrstündiger Einlaufvorgang notwendig, um überschüssiges Schichtmaterial abzustossen.

Weiterhin ist ein Verfahren bekannt (DE-A 27 57 984), bei dem die Kontaktstellen elektrischer Schalter mit Trockenschmiermittel beschichtet werden. Es wird dabei mit einem $MoS_2$-Gleitlack gearbeitet, der für die Beschichtung von Schüttgut nicht geeignet ist. Bei nach diesem Verfahren behandelten Teilen wird meist ein $MoS_2$-Überschuss aufgetragen mit dem Nachteil, dass bei Verharzen oder Verkoken des organischen Bindemittels im Gleitlack die Schmiereigenschaften sich weitestgehend verlieren und der $MoS_2$-Überschuss sogar abrasiv wirken kann.

Des weiteren ist bekannt, reines $MoS_2$-Pulver auf Teile aufzubringen, diese zu trommeln und überschüssiges Pulver, beispielsweise mittels Sägespänen oder Lederschnitzeln abzutragen. Derartig behandelte Teile lassen sich schlecht handhaben. Besonders nachteilig ist dies bei anschliessenden Montagevorgängen, da es zur Verschmutzung von Fingern, Geräten und Einrichtungen kommt. Zudem verstopfen sich enge Kanäle an Montagevorrichtungen, die mit so behandelten Teilen beschickt werden.

Es ist Aufgabe der Erfindung, ein Verfahren zu schaffen, bei dem unter Beseitigung der vorerwähnten Nachteile die guten Schmiereigenschaften des $MoS_2$-Pulvers erhalten bleiben.

Diese Aufgabe wird erfindungsgemäss durch ein Verfahren gelöst, bei dem anschliessend an den ersten Schritt in einem zweiten Schritt die Teile in eine Wachs-, Hartwachs- oder Hartparaffinlösung kurz eingebracht werden und dabei auf den Teilen befindlicher Überschuss an Pulver entfernt und zugleich deren Oberfläche mit einem dünnen Wachs- bzw. Paraffinfilm versiegelt wird. Vorzugsweise wird beim ersten Schritt das $MoS_2$-Pulver auf die Oberfläche der Teile aufgetrommelt. Für den zweiten Schritt wird eine Wachslösung in Trichloräthylen als Lösungsmittel verwendet.

Nach diesem Verfahren behandelte Teile sind griffest und geben während der Handhabung sowie bei anschliessenden Montagevorgängen praktisch kein $MoS_2$-Pulver ab. Ein weiterer Vorteil besteht darin, dass der geschlossene Wachs- oder Paraffinfilm die mit $MoS_2$-Pulver behandelte Oberfläche der Teile versiegelt und zu noch besseren Gleiteigenschaften beiträgt.

Die Verwendung des Verfahrens ist bei Leitungsschutzschaltern vorgesehen. Hier werden vorzugsweise die Oberflächen der metallischen Verklinkungsteile im Schaltschloss nach diesem Verfahren behandelt. Aber auch alle anderen Geräte mit Metallteilen, die im späteren Betrieb Gleitbewegungen unterliegen, können derart geschmiert werden.

## Patentansprüche

1. Verfahren zum Schmieren mechanisch beanspruchter Teile, insbesondere von gegenseitig im Eingriff befindlichen, aufeinander gleitenden Stahlteilen, unter Verwendung von Trockenschmiermitteln, bei dem in einem ersten Schritt $MoS_2$ (Molybdändisulfid)-Pulver auf die Teile aufgebracht wird, dadurch gekennzeichnet, dass anschliessend in einem zweiten Schritt die Teile in eine Wachs-, Hartwachs- oder Hartparaffin-Lösung kurz eingebracht werden und dabei auf den Teilen befindlicher Überschuss an Pulver entfernt und zugleich deren Oberfläche mit einem dünnen Wachs- bzw. Paraffinfilm versiegelt wird.

2. Verfahren nach Anspruch 1, dadurch gekennzeichnet, dass das $MoS_2$-Pulver auf die Oberfläche der Teile aufgetrommelt wird.

3. Verfahren nach Anspruch 1, dadurch gekennzeichnet, dass eine Wachslösung in Trichloräthylen als Lösungsmittel verwendet wird.

4. Anwendung des Verfahrens nach den Ansprüchen 1 bis 3 auf die Oberflächen der metallischen Verklinkungsteile in Schaltschlössern von Leitungsschutzschaltern.

## Revendications

1. Procédé de lubrification de pièces soumises à des efforts mécaniques, particulièrement de pièces en acier en prise mutuelle et coulissant les unes sur les autres au moyen de lubrifiants secs, selon lequel on épand de la poudre de $MoS_2$ (bisulfure de molybdène) dans une première phase, caractérisé en ce qu'au cours d'une seconde phase qui suit la première, les pièces sont plongées brièvement dans une solution de cire, de cire dure ou de paraffine dure, ce qui élimine l'excédent de poudre qui surcharge des pièces et rend simultanément leur surface étanche avec un mince film de cire ou de paraffine.

2. Procédé selon la revendication 1, caractérisé en ce qu'on étale au tonneau la poudre de $MoS_2$ sur la surface des pièces.

3. Procédé selon la revendication 1, caractérisé en ce qu'on utilise une solution de cire dans du trichloréthylène comme solvant.

4. Application du procédé selon les revendications 1 à 3 aux surfaces métalliques de l'encliquetage des verrous de maintien de disjoncteurs de protection de canalisation.

## Claims

1. Method for the lubricating of mechanically stressed parts, in particular of steel parts disposed in mutual engagement and sliding one on the other, with the use of dry lubricants, in which $MoS_2$ (molybdenum disulfide) powder is applied on the parts in a first step, characterised thereby, that the parts are afterwards in a second step briefly introduced into a solution of wax, hard wax or of hard paraffin and excess of powder then disposed on the parts is removed and their surface is sealed at the same time with a thin film of wax or paraffin.

2. Method according to claim 1, characterised thereby, that the molybdenum disulfide powder is barrelled onto the surface of the parts.

3. Method according to claim 1, characterised thereby, that a wax solution in trichloroethylene is used as solvent.

4. Application of the method according to the claims 1 to 3 to the surfaces of the metallic latching parts in locking cams of line protection switches.